(19) Europäisches Patentamt
European Patent Office
Office européen des brevets

(11) Publication number: **0 481 080 B1**

(12) # EUROPEAN PATENT SPECIFICATION

(45) Date of publication of patent specification: **09.08.95**

(51) Int. Cl.6: **B60C 9/08**, B60C 9/20, D07B 1/06

(21) Application number: **91900940.7**

(22) Date of filing: **25.12.90**

(86) International application number: **PCT/JP90/01694**

(87) International publication number: **WO 91/17063 (14.11.91 91/26)**

(54) **PNEUMATIC RADIAL TIRE.**

(30) Priority: **01.05.90 JP 1117/91**
**11.05.90 JP 120023/90**

(43) Date of publication of application: **22.04.92 Bulletin 92/17**

(45) Publication of the grant of the patent: **09.08.95 Bulletin 95/32**

(84) Designated Contracting States: **DE ES FR GB IT LU**

(56) References cited:
**EP-A- 0 043 563**
**EP-A- 0 269 036**
**EP-A- 0 317 636**
**DE-A- 3 442 799**
**GB-A- 2 076 320**
**JP-A- 0 253 982**
**JP-A- 1 201 592**
**JP-A- 1 239 181**
**JP-A- 1 278 543**
**JP-A- 6 431 837**
**US-A- 4 836 262**
**US-A- 5 014 761**

**PATENT ABSTRACTS OF JAPAN vol. 9, no. 94 (M-374)(1817) 24 April 1985 & JP-A-59 220 402 (YOKOHAMA GOMU K.K) 11 December 1984**

(73) Proprietor: **Bridgestone Corporation**
**1-1, Kyobashi 1-Chome**
**Chuo-Ku**
**Tokyo 104 (JP)**

(72) Inventor: **NAKAGAWA, Sumito, 5-5-738, Ogawahigashi-ko 3chome**
**Kodaira-shi**
**Tokyo 187 (JP)**
Inventor: **KAWASAKI, Kiyohito, 1364-6 Ninomiya,**
**Akigawa-shi**
**Tokyo 197 (JP)**
Inventor: **KONDO, Hitoshi, 1-28-605, Sakaecho 3-chome**
**Higashimurayama-shi**
**Tokyo 189 (JP)**

(74) Representative: **Whalley, Kevin et al**
**MARKS & CLERK,**
**57-60 Lincoln's Inn Fields**
**London WC2A 3LS (GB)**

EP 0 481 080 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a radial tire having considerably improved durable life by improving metal cords applied to reinforcements such as belt cord and carcass ply cord in the radial tire and coating rubber therefor.

In tires using steel cords as a reinforcing material, separation at belt end (BES) and separation at carcass ply end (PES) are caused, which makes retreading impossible, and there may also be a safety problem. In order to prevent the occurrence of separation at the steel cord end, Japanese Utility Model laid open No. 61-206695 discloses, for example, an improving technique of steel cords wherein the bending rigidity of the steel cord is made large for the prevention of BES. However, such steel cords have a problem in the resistance to fretting fatigue, and also cannot be said to be sufficient at the present when considering that the bending rigidity of the steel cord itself lowers due to the increase of the strength in the steel cord recently required for reducing the weight of the radial tire.

That is, there are caused problems such as lowering of resistance to belt end separation (resistance to BES), and lowering of corrosion fatigue resistance in metal cord as a carcass ply material and the like due to the increase of the strength in the metal cord.

Therefore, it is required to develop a technique of improving not only the steel cord but also the combination of steel cord and rubber. Particularly, in order to prevent separation failures, it is important to improve the coating rubber for the steel cord and rubber surrounding the cord end to conduct the control of crack growth in the rubber itself. In Japanese Patent laid open No. 62-273237 and No. 63-256636 are disclosed rubber compositions having an excellent resistance to crack growth, but the adhesion property to steel cord as a coating rubber is not disclosed at all, so that such a rubber composition is not suitable as a coating rubber.

In order to suppress BES and PES by using a means other than the use of the reinforcing material in the vicinity of the end portion, it is necessary to conduct the control of crack growth in rubber while maintaining the adhesion performance between cord and rubber at a level higher than the conventional one.

As a conventional method of adhering tire cords to rubber, there is generally used a direct adhesion method wherein the tire cord is subjected to a brass plating of copper and zinc alloy and then reacted with sulfur in rubber. In this case, it is attempted to increase the adhesion force by adding an organic cobalt salt such as cobalt naphthenate or the like to the coating rubber.

The technique of improving the plated steel cord to increase the adhesion force between cord and rubber is disclosed in Japanese Patent laid open No. 54-89939, No. 54-89940, and No. 57-56110. In all cases, however, a slight amount of cobalt is only existent on the outermost surface of the cord due to thermal diffusion in the drawing after the plating, so that the adhesion action of cobalt to the cord surface is very small and there is a problem that good adhesion is not obtained to rubber containing no organic cobalt salt. Particularly, the present inventors have examined the content of the above Japanese Patent laid open No. 57-56110 and confirmed that when a ternary alloy plated layer of cobalt was produced by the method described, the cobalt rich layer was not formed on the surface but diffused thereinto and hence good adhesion was not obtained to rubber containing no organic cobalt salt.

The inventors have made studies with respect to steel cord reinforcement and coating rubber in radial tires for developing such tires which are capable of largely improving durable performances under the above circumstances, and found that the progress of rubber cracking is too fast in the conventional combination of brass plated cord and coating rubber and hence it is undesirably apt to cause BES and PES in the radial tire using such cords and rubber.

Particularly, there is a problem that BES is apt to be caused when using high-strength cords in which tensile strength TS ($Kgf/mm^2$) of each steel filament (wire) constituting the steel cord is represented by the following equations:

$$TS \geqq 281.60 + 288.75d \quad (0.1 \leqq d < 0.2)$$
$$TS \geqq 427.25 - 439.50d \quad (0.2 \leqq d \leqq 0.5)$$

(wherein d is diameter of the filament).

Furthermore, when such cords and rubber are applied to carcass ply cord and coating rubber in radial tires for trucks and buses (TBR), radial tires for light trucks (LSR) and the like, there has been found a problem that the corrosion fatigue resistance is lowered under severe use states, and a problem that the fracture resistance at the end of the carcass ply (resistance to ply end separation) is apt to be lowered because cracks are apt to be caused from the turn-up end of the carcass ply cord. Moreover, when high-strength cords having a tensile strength of filament of not less than 320 $Kgf/mm^2$ is used as ply cord, the

corrosion fatigue resistance is largely lowered.

A known tire comprising the features of the preamble of claim 1 is shown, e.g. by EP-A-0 269 036.

The present invention aims to provide an improving technique for radial tires capable of largely improving resistance to belt end separation (resistance to BES), resistance to carcass ply end (resistance to PES) and corrosion fatigue resistance.

The present invention in one aspect provides a radial tire comprising a toroidal carcass composed of steel cords substantially arranged in parallel to a meridional section of the tire and a coating rubber therefor, and a belt composed of steel cords arranged outside of a crown portion of the carcass and inside a tread and a coating rubber therefor, wherein the steel cord in the belt

(1) is obtained by twisting a plurality of filaments having a carbon content of 0.75-0.90% by weight,

(2) satisfies the following relations as a tensile strength TS ($Kgf/mm^2$) at a diameter d of the filament:

$$TS \geqq 281.60 + 288.75d \text{ when } 0.1 \leqq d < 0.2$$
$$TS \geqq 427.25 - 439.50d \text{ when } 0.2 \leqq d \leqq 0.5,$$

(3) and is provided at its surface with a cobalt plated layer,

and the coating rubber has a 100% modulus of not less than 20 $Kgf/cm^2$ after vulcanization

Furthermore, in another aspect of the radial tire according to the invention, the steel cord in the belt may be a steel single wire, and in this case the filament diameter is 0.2-0.7 mm, and the surface of the steel single wire is provided with a cobalt plated layer, and the coating rubber after vulcanization has a 100% modulus of not less than 20 $Kgf/cm^2$.

Moreover, in a further aspect of the radial tire according to the invention, the steel cord of the carcass ply is obtained by twisting a plurality of filaments each

(1) having a carbon content of 0.75-0.90% by weight,

(2) having a tensile strength of filament of not less than 320 $Kgf/mm^2$,

(3) and being provided at its surface with a cobalt plated layer,

and the coating rubber has a 100% modulus of not less than 20 $Kgf/cm^2$ after vulcanization.

The twisting method of the filaments as the steel cord in the belt and the carcass according to the invention may be single construction, layer construction or strand construction. As the diameter d of the filament, it is preferably 0.15-0.25 mmØ in the case of the belt and 0.15-0.25 mmØ in the case of the carcass.

Further, such a steel filament can be rendered into a higher tensile strength by such a multi-stage drawing that the reduction area is 97.5% and the drawing number is increased by 3-4 times from the usual drawing with the use of a lubricant having a good drawability. In the case of the belt, the relation between d and TS preferably satisfies the following equations:

$$TS \geqq 345 - 30d \text{ when } 0.1 \leqq d < 0.2$$
$$TS \geqq 379 - 200d \text{ when } 0.2 \leqq d \leqq 0.5.$$

When using steel single wires as the steel cord for the belt according to the invention, it is practically preferable that the carbon content is within a range of 0.65-0.90% by weight, more preferably 0.75-0.90% by weight.

In the invention, it is preferable that at least one of the carcass and the belt has a single construction of lxn structure (n is an integer of 2-6) by twisting 2-6 filaments and the filament diameter is 0.15-0.5 mm.

More preferably, in the single constructed steel cord of lxn structure, n is 2; or when n is 3-6, an elongation ($P_1$) when a load of 5.0 kg is applied to the steel cord is within a range of 0.2-1.2%.

As a coating method through cobalt plating, there may be an electroplating or various dry platings. Furthermore, the coating step may be carried out before or after the twisting step. The thickness of cobalt plated layer is preferably within a range of 0.05-0.40 µm in the case of the electroplating, and within a range of 0.001-0.15 µm in the case of the dry plating.

Moreover, any one of iron as well as copper, zinc and brass applied to iron may be used as a substrate for cobalt plating.

The coating rubber for the carcass or the belt is preferably a rubber composition containing 0-0.1 part by weight as a cobalt metal of organic cobalt metal salt and 0.15-4.0 parts by weight of sulfur based on 100 parts by weight of rubber component. More preferably, the rubber composition also contains 0.05-6.0 parts by weight of a bismaleimido compound represented by the following formula:

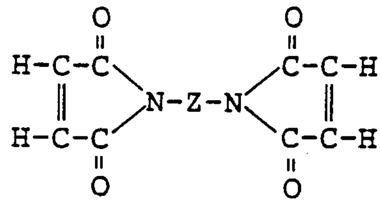

(wherein Z is an alkylene group, phenylene group, alkyl-phenylene group or a combination of two or more of these groups).

In the invention, the reason why the carbon content of the filament in the twisted cord is within a range of 0.75-0.90% by weight is due to the fact that when it is less than 0.75% by weight, sufficient filament tensile strength is hardly obtained, while when it exceeds 0.90% by weight, proeutectoid cementite is produced to enbrittle the filament and hence the use of the twisted cord becomes unsuitable as a tire cord.

Further, according to the invention, when the twisted cord is used in the belt, the filament tensile strength TS is required to satisfy the following equations:

$$TS \geqq 281.60 + 288.75d \text{ when } 0.1 \leqq d < 0.2$$
$$TS \geqq 427.25 - 439.50d \text{ when } 0.2 \leqq d \leqq 0.5.$$

This is due to the fact that when considering the large reduction of tire weight, the use of cords with a low tensile strength not satisfying the above equations does not provide a practical effect. Also, the reason why the relation is divided into the above two equations around d + 0.2 mm is due to the fact that the peak of the tensile strength is d = 0.2 mm in accordance with the easiness of the drawing.

In addition, the reason why the filament tensile strength is not less than 320 $Kgf/mm^2$ when the twisted cord is used in the carcass is due to the fact that when considering the large reduction of tire weight, a practical effect is not obtained at a tensile strength of less than 320 $Kgf/mm^2$.

Moreover, the upper limit of the filament tensile strength is about 450 $Kgf/mm^2$ from a viewpoint of production workability.

In the case of rubber penetrable cord of the single construction according to the invention, rubber penetrates into the inside of the cord, so that the adhesion property between cord and rubber inside the cord becomes very important in view of the tire durability.

In the single constructed steel cord of lx2 structure by twisting two filaments, the step of applying and forming a cobalt layer to the surface of the filament may be carried out by a wet process such as electroplating, or a dry plating process before and after the twisting step of the cord. This is due to the fact that even when the single constructed steel cords are subjected to a cobalt plating treatment, the full surface of the filament is coated with cobalt plated layer.

On the other hand, in the single constructed steel cords of lx3 to lx6 structures by twisting 3-6 filaments, the cobalt plated layer may be formed onto the surface of the filament inside the cord by a wet process such as electroplating, but such a formation becomes difficult in the case of the dry plating process. Even in the wet process, however, there exist technical production problems such as tension control in a plating line, formation amount and uniformity of plated layer.

In the single twisted steel cord of lx3 to lx6 structure, therefore, when using the dry plating process, it is preferable that a cobalt plated layer is formed on the surfaces of the filaments after the drawing and then these filaments are twisted with each other, while when using the wet process such as electroplating, the step of forming the cobalt plated layer may be carried out before and after the twisting step, but it is preferable to conduct the step of forming the cobalt plated layer before the twisting step.

The steel cord used for the reinforcement of the belt and/or the carcass ply according to the invention is preferably a single constructed steel cord of lxn (n is an integer of 2-6) and the filament diameter is 0.15-0.5 mm, considering the penetrability of rubber into the inside of the cord as mentioned above.

Furthermore, the reason why the elongation ($P_1$) of the steel cords having lx3 to lx6 structures when using 3-6 filaments is preferably within a range of 0.2-1.2% is due to the fact that when the elongation ($P_1$) is less than 0.2%, the coating rubber hardly penetrates into the inside of the cord, while when it exceeds 1.2%, the tension becomes easily non-uniform during the calendering operation for surrounding the steel cord with the coating rubber and hence disturbance of cords in the tire occurs to easily cause lowering of conformity and durability. Moreover, in the case of the lx2 structure, the coating rubber well penetrates into the inside of the cord even when the twisting structure of the cord is not the single constructed rubber

penetrable structure as mentioned above.

The reason why the preferable amount of sulfur in the coating rubber is 0.5-4.0 parts by weight based on 100 parts by weight of rubber component is due to the fact that when it is less than 0.5 part by weight, sufficient crosslinking reaction or adhesion reaction does not occur, while when it exceeds 4 parts by weight, the effect of the invention on the improvement of the resistance to BES and resistance to PES is lost.

Furthermore, the reason why the preferable amount of the organic cobalt salt in the coating rubber is not more than 0.1 part by weight as a cobalt metal is due to the fact that when it exceeds 0.1 part by weight, the action of degrading the adhesion property is brought about and also thermal aging of rubber is promoted to degrade the durability of rubber. Said amount is preferably less than 0.05 part by weight.

Also, when the bismaleimido compound represented by the above formula is compounded for further improving the heat resistance of the coating rubber, the compounding amount is limited to a range of 0.5-6.0 parts by weight. When said amount is less than 0.05 part by weight, the effect of improving the resistance to BES is not obtained, while when it exceeds 6.0 parts by weight, further effect by increasing the amount cannot be expected. Said amount is preferably 0.05-3 parts by weight, more particularly 0.1-2.0 parts by weight.

In addition, the reason why the modulus of the coating rubber is limited to not less than 20 $Kgf/cm^2$ is due to the fact that when it is less than 20 $Kgf/cm^2$, the strain of the coating rubber against input to the belt and the carcass ply becomes too large and hence the effect of the invention on the improvement of the resistances to BES and PES is lost and there is caused a problem in the durability. Particularly, when applied to the belt of a radial tire for passenger cars, the steering stability undesirably lowers.

Moreover, according to the invention, the reason why the preferable thickness of the cobalt plated layer through electroplating is within a range of 0.05-0.40 $\mu m$ is due to the fact that when it is less than 0.05 $\mu m$, a uniform and stable plated film is not obtained and the substrate may sometimes be exposed to unstabilize the adhesion to rubber, while when it exceeds 0.40 $\mu m$, the gauge of plated cobalt becomes undesirably thicker in view of the production efficiency and cost. Similarly, the reason why the preferable thickness of the cobalt plated layer through the dry plating process is within a range of 0.001-0.15 $\mu m$ is due to the fact that when it is less than 0.001 $\mu m$, the plated layer is at a state of island-like crystal or network-like crystal and stable adhesion to rubber is not obtained, while when it exceeds 0.15 $\mu m$, the productivity and cost becomes unfavourable and the adhesion property inversely lowers.

According to the invention, the organic cobalt salt included in the coating rubber for the improvement of adhesion force to the conventional cord coated at the outermost surface with brass can be removed from the coating rubber or reduced to a very slight amount by covering the surface of the outermost layer of the steel cord with the cobalt plated layer, and consequently it is possible to obtain a rubber composition capable of controlling the deterioration of adhesion force with lapse of time and thermal aging of strength at break, elongation and the like based on the addition of the organic cobalt salt.

Although a relatively large amount of sulfur (4-8 parts by weight) was used in the conventional technique for stably maintaining the heat-resistant adhesion property, according to the invention the amount of sulfur can be reduced to not more than 4 parts by weight, whereby the thermal aging of rubber due to the use of excessive amount of sulfur can be prevented and the resistance to crack growth is largely improved and further the corrosion fatigue resistance of the adjoining steel cord by the reduction of corrosive component can be improved.

In the tire according to the invention, therefore, not only can the corrosion fatigue resistance, which becomes a problem in the use of high-strength cord, be largely improved, but also the resistance to ply end separation can be considerably improved.

Furthermore, when the bismaleimido compound is added to the coating rubber, not only is the thermal aging of rubber controlled, but also the modulus of rubber under a low deformation region can be improved, so that the resistance to BES under a low input can also be improved. Moreover, the use of the bismaleimido compound against the conventional brass plated cord usually degrades the adhesion property, so that the rubber composition containing the above compound cannot be used as a coating rubber for tire cord in the conventional technique.

As mentioned above, in the radial tires according to the invention, the resistance to BES and the resistance to PES can be improved under thermally severe conditions apt to promote thermal aging, and under thermally and mechanically gentle conditions.

The invention will be further described with reference to the accompanying drawings, in which:

Fig. 1 is a schematically partial section view of a radial truck and bus tire (TBR); and

Fig. 2 is a schematically partial section view of a radial passenger car tire (PSR).

Examples 1-10, Comparative Examples 1-7

The invention will be described with reference to examples below.

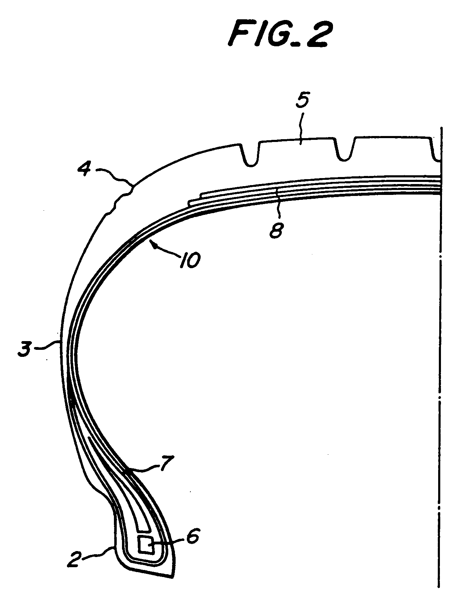

As a tire for evaluation, there were used a radial truck and bus tire 1 having a tire size of 1000 R20 as shown in Fig. 1 and a radial passenger car tire 10 having a tire size of 185 SR14 as shown in Fig. 2. In the drawings, numeral 2 is a bead portion, numeral 3 a sidewall portion, numeral 4 a shoulder portion, numeral 5 a tread portion, numeral 6 a bead wire portion, numeral 7 a carcass ply and numeral 8 a belt portion.

In the radial truck and bus tire, the cross belt layers had a structure of 3x0.20 mm + 6 x 0.38 mm, while in the radial passenger car tire, the cross belt layers had a structure of lx5x0.23 mm. The end count of cords in each tire was determined so as to provide the same strength as in control tires of Comparative Examples 1 and 4.

As a method of coating a filament with cobalt before the twisting of the filaments, there were used two processes of electroplating and dry plating (sputtering).

The electroplating was carried out under the following electroplating conditions after pretreatments of electrolytic degreasing and pickling. After the formation of cobalt coating, the filament was sufficiently washed through ultrasonic wave and then dried.

Electroplating conditions

- Bath composition
  - cobalt sulfate 330 g/ℓ
  - cobalt chloride 45 g/ℓ
  - boric acid 30 g/ℓ
  - sodium chloride 25 g/ℓ
- pH of bath : 4
- Bath temperature : 40·C
- Current density : 5 A/$dm^2$

On the other hand, the dry plating was carried out by using a magnetron sputtering device as follows. At first, the inside of the chamber was evacuated to a vacuum degree of not more than 10-5 Torr and a slight amount of argon gas was passed thereinto to adjust the vacuum degree to 0.1 Torr, and then a surface of a test specimen was cleaned through high frequency glow discharge of 13.56 MHz for 5 minutes. After the cleaning, the high frequency glow discharge was stopped and a direct current of 600V was applied to a target of metal sample (cobalt), whereby the sputtering was carried out at a target current of 0.5A by argon plasma to form a cobalt coating.

As a coating rubber composition for the belt in the radial truck and bus tire (TBR) and the radial passenger car tire (PSR), there were used rubber compositions as shown in Tables 1 and 2, respectively. Furthermore, the same rubber composition as mentioned above was used in adjoining members at end portions of the cords. Moreover, the variable values in Table 1 are shown in Table 2.

Table 1

| Rubber composition | | |
|---|---|---|
| Rubber composition | TBR (part by weight) | PSR (part by weight) |
| Natural rubber | 80 | 80 |
| Polyisoprene rubber | 20 | 20 |
| Carbon black | 60 | 55 |
| Zinc white | 10 | 8 |
| Antioxidant (made by Monsanto, trade name: Santoflex 13) | 1.5 | 1.5 |
| Vulcanization accelerator (made by Ouchi Shinko K.K., ade name: Noccelar DZ) | variable | variable |
| Sulfur | variable | variable |
| Organic cobalt salt (cobalt naphthenate) | variable | variable |

The following evaluations for tire performances were carried out with respect to the above test tires.

Resistance to BES

It was evaluated by cutting the radial passenger car tire after the actual running and measuring a crack length at belt end in the cross belt cord layer located toward the tread side. That is, rubber was peeled off from cords of this belt layer to expose ends of cords, and the length of crack produced along the cord was measured by means of vernier calipers. The property was indicated by an index on the basis that the tires of Comparative Examples 1 and 4 were 100. The larger the index value, the better the resistance to BES.

Effect of reducing weight

The steel cords used in the test tire were embedded in the coating rubber for the belt to form a belt tread composite. In this case, the number of cords in each test tread was changed so as to provide the same strength as in the belt tread composites of control tires of Comparative Examples 1 and 4, whereby the effect of reducing weight was indicated as a weight of steel cords used per tire by an index on the basis that the control tires of Comparative Examples 1 and 4 were 100. The smaller the index value, the better the effect of reducing weight.

The results of performance evaluations with respect to the above test tires are shown in Table 2.

Moreover, the substrate for cobalt plating in the above examples was iron plated with brass, but even when using iron alone as well as iron plated with copper or zinc as a substrate, the evaluation results shown in Table 2 were unchanged.

Table 2(a): Tires for truck and bus

| | | Comparative Example 1 | Comparative Example 2 | Comparative Example 3 | Example 1 | Example 2 | Example 3 | Example 4 | Example 5 |
|---|---|---|---|---|---|---|---|---|---|
| Plating | process | electro-plating | electro-plating | electro-plating | electro-plating | dry plating | electro-plating | electro-plating | electro-plating |
| | outermost coating metal | brass | brass | brass | cobalt | cobalt | cobalt | cobalt | cobalt |
| | cobalt plated thickness ($\mu m$) | - | - | - | 0.15 | 0.04 | 0.15 | 0.15 | 0.15 |
| Coating rubber | organic cobalt salt (cobalt naphthenate) (Phr) | 2.5 | 2.5 | 2.5 | - | - | - | - | 0.3 * |
| | sulfur (Phr) | 6.0 | 6.0 | 6.0 | 4.0 | 4.0 | 4.0 | 3.5 | 3.5 |
| | vulcanization accelerator (Phr) | 0.8 | 0.8 | 0.8 | 1.8 | 1.8 | 1.8 | 1.8 | 1.8 |
| | 100% modulus ($Kgf/cm^2$) | 60 | 60 | 60 | 60 | 60 | 60 | 55 | 58 |
| Cords | twisting structure | 3 × 0.20 mm + 6 × 0.38 mm | | | | | | | |
| | C content in steel (wt%) | 0.72 | 0.82 | 0.82 | 0.82 | 0.82 | 0.82 | 0.82 | 0.82 |
| | tensile strength ($Kgf/mm^2$) core<br>sheath | 310<br>235 | 370<br>280 | 400<br>305 | 400<br>305 | 400<br>305 | 400<br>305 | 370<br>280 | 370<br>280 |
| | cord tenacity (kg/cord) | 179 | 215 | 233 | 233 | 233 | 233 | 215 | 215 |
| | end count (cords/50 mm) | 30.7 | 25.6 | 23.6 | 23.6 | 23.6 | 23.6 | 25.6 | 25.6 |
| Evaluation | resistance to BES | 100 | 96 | 93 | 130 | 135 | 128 | 130 | 125 |
| | weight reducing effect | 100 | 83 | 77 | 83 | 83 | 77 | 83 | 83 |

* 0.03 Phr as cobalt metal

Table 2(b): Tires for passenger car

| | | Comparative Example 4 | Comparative Example 5 | Comparative Example 6 | Comparative Example 7 | Example 6 | Example 7 | Example 8 | Example 9 | Example 10 |
|---|---|---|---|---|---|---|---|---|---|---|
| | process | electro-plating | electro-plating | electro-plating | electro-plating | electro-plating | dry plating | electro-plating | electro-plating | electro-plating |
| Plating | outermost coating metal | brass | brass | brass | cobalt | cobalt | cobalt | cobalt | cobalt | cobalt |
| | cobalt plated thickness (μm) | - | - | - | 0.15 | 0.15 | 0.03 | 0.15 | 0.15 | 0.15 |
| Coating rubber | organic cobalt salt (cobalt naphthenate) (Phr) | 2.0 | 2.0 | 2.0 | - | - | - | - | - | 0.3 * |
| | vulcanization accelerator (Phr) | 5.0 | 5.0 | 5.0 | 1.5 | 3.0 | 3.0 | 3.0 | 4.0 | 4.0 |
| | sulfur (Phr) | 0.8 | 0.8 | 0.8 | 0.5 | 1.8 | 1.8 | 1.8 | 1.8 | 1.8 |
| | 100% modulus ($Kgf/cm^2$) | 44 | 44 | 44 | 18 | 45 | 45 | 45 | 52 | 55 |
| Cords | twisting structure | 1 × 5 × 0.23 mm | | | | | | | | |
| | C content in steel (wt%) | 0.72 | 0.82 | 0.82 | 0.82 | 0.82 | 0.82 | 0.82 | 0.82 | 0.82 |
| | tensile strength ($Kgf/mm^2$) core | 295 | 355 | 385 | 355 | 355 | 355 | 385 | 355 | 355 |
| | cord tenacity (kg/cord) | 59 | 71 | 77 | 71 | 71 | 71 | 77 | 71 | 71 |
| | end count (cords/50 mm) | 41.9 | 34.8 | 32.1 | 34.8 | 34.8 | 34.8 | 32.1 | 34.8 | 34.8 |
| Evaluation | BES resistance to BES | 100 | 99 | 97 | 97 | 130 | 130 | 125 | 120 | 115 |
| | weight reducing effect | 100 | 83 | 77 | 83 | 83 | 83 | 77 | 83 | 83 |

* 0.03 Phr as cobalt metal

Examples 11-14, Comparative Examples 8-9

As a tire for evaluation, there was used a radial passenger car tire having a tire size of 165 SR13.

In the cross belt layers of the radial passenger car tire were used single steel filaments each having a filament diameter of 0.50 mm. Moreover, the steel cord used had a carbon content of 0.82% by weight and

the end count thereof was constant.

As a cobalt coating method for the filament, there were used two processes of electroplating and dry plating (sputtering). These processes were the same as in the aforementioned examples.

As a coating rubber composition for the belt of the radial passenger car tire (PSR), there were used rubber compositions as shown in Tables 3 and 4. Furthermore, the same rubber composition as mentioned above was used in adjoining members at end portions of the cords. Moreover, the variable values in Table 3 are shown in Table 4.

Table 3

| Rubber composition | |
|---|---|
| Natural rubber | 80 parts by weight |
| Polyisoprene rubber | 20 |
| Carbon black | 55 |
| Zinc white | 8 |
| Antioxidant (made by Monsanto, trade name: Santoflex 13) | 1.5 |
| Vulcanization accelerator (made by Ouchi Shinko K.K., trade name: Noccelar DZ) | variable |
| Sulfur | variable |
| Organic cobalt salt (cobalt naphthenate) | variable |

The resistance to BES was evaluated with respect to the above test tires in the same manner as in Example 1.

In this case, the property was indicated by an index on the basis that the tire of Comparative Example 8 was 100. The larger the index value, the better the resistance to BES.

The results of performance evaluation with respect to the test tires are shown in Table 4.

Moreover, the substrate for cobalt plating in the above examples was iron plated with brass, but even when using iron alone as well as iron plated with copper or zinc as a substrate, the evaluation results shown in Table 4 were unchanged.

Table 4

| | | Comparative Example 8 | Comparative Example 9 | Example 11 | Example 12 | Example 13 | Example 14 |
|---|---|---|---|---|---|---|---|
| Plating | process | electro-plating | electro-plating | electro-plating | dry plating | electro-plating | electro-plating |
| | outermost coating metal | brass | cobalt | cobalt | cobalt | cobalt | cobalt |
| | cobalt plated thickness ($\mu m$) | - | 0.15 | 0.15 | 0.03 | 0.15 | 0.15 |
| Coating rubber | organic cobalt salt (cobalt naphthenate) (Phr) | 2.0 | - | - | - | - | 0.3 * |
| | sulfur (Phr) | 5.0 | 1.5 | 3.0 | 3.0 | 4.0 | 4.0 |
| | vulcanization accelerator (Phr) | 0.8 | 0.5 | 1.8 | 1.8 | 1.8 | 1.8 |
| | 100% modulus ($Kgf/cm^2$) | 44 | 18 | 45 | 45 | 52 | 55 |
| Tire performance: resistance to BES | | 100 | 97 | 140 | 138 | 135 | 135 |

* 0.03 Phr as cobalt metal (wt%)

Examples 15-21, Comparative Examples 10-14

As a tire for evaluation, there was used a radial truck and bus tire (TBR) having a tire size of 11/70 R22.5, in which two kinds of compact cord of 3+9x0.20 mm+l (same twisting direction) and steel cord of

lx5x0.25 mm were arranged at an angle of 90° with respect to the circumferential direction of the tire as a carcass ply cord structure and the end count was determined so as to meet with the casing strength of the control tire (Comparative Examples 10 and 14 shown in Table 6).

As a coating rubber composition for the carcass ply constituting the above tire, there were used rubber compositions shown in Table 5 and 6. Furthermore, the same composition was applied to adjoining members at ply cord ends.

Table 5

| Rubber composition | |
|---|---|
| Rubber composition | (parts by weight) |
| Natural rubber | 80 |
| Polyisoprene rubber | 20 |
| Carbon black | 50 |
| Zinc white | 8 |
| Antioxidant (made by Monsanto, trade name: Santoflex 13) | 1.4 |
| Vulcanization accelerator (made by Ouchi Shinko K.K., trade name: Noccelar DZ) | variable |
| Sulfur | variable |
| Organic cobalt salt (cobalt naphthenate) | variable |

Moreover, two processes of electroplating and dry plating (sputtering process) were used as a plating method in the same manner as in the aforementioned examples.

The performances were evaluated with respect to the above test tires.

Resistance to CBU

Tires using the above steel cords in the carcass ply were prepared and mounted onto a rim, during which about 300 cc of water was incorporated into a space between the inner liner and the tube in the tire. The life (running distance) until the occurrence of cord breaking-up failure (CBU) was measured by a drum test on each test tire and indicated by an index on the basis that the control tire of Comparative Example 10 was 100. The larger the index value, the better the resistance to CBU.

Resistance to PES

The resistance to carcass ply end separation was evaluated by buffing the tread rubber of the test tire and at a state of causing no adverse effect on the belt layer due to heat generation. Specifically, the test tire was rotated on a drum under conditions that load was JIS 200%, speed was 60 km/hr and internal pressure was 8.25 $Kgf/mm^2$, during which a drum running distance of the test tire when separation at the end of carcass ply cord was caused to generate large vibration was measured and indicated by an index on the basis that the control tire of Comparative Example 10 was 100. The larger the index value, the better the resistance to carcass ply end separation.

Effect of reducing weight

The steel cords used in the test tire were embedded in the coating rubber for the carcass to form a ply tread composite. In this case, the number of cords in each test tread was changed so as to provide the same strength as in the ply tread composites of control tires of Comparative Example 10, whereby the effect of reducing weight was indicated as a weight of steel cords used per tire by an index on the basis that the control tires of Comparative Example 10 were 100. The smaller the index value, the better the effect of reducing weight.

The results of performance evaluations with respect to the above test tires are shown in Table 6.

Moreover, the substrate for cobalt plating in the above examples was iron plated with brass, but even when using iron alone as well as iron plated with copper or zinc as a substrate, the evaluation results shown in Table 6 were unchanged.

Table 6(a)

| | | Comparative Example 10 | Comparative Example 11 | Comparative Example 12 | Comparative Example 13 | Example 15 | Example 16 |
|---|---|---|---|---|---|---|---|
| Plating | process | electro-plating | electro-plating | electro-plating | electro-plating | electro-plating | dry plating |
| | outermost coating metal | brass | brass | brass | cobalt | cobalt | cobalt |
| | cobalt plated thickness (μm) | - | - | - | 0.15 | 0.20 | 0.04 |
| Coating rubber | organic cobalt salt (cobalt naphthenate) (Phr) | 2.0 | 2.0 | 2.0 | - | - | - |
| | sulfur (Phr) | 5.0 | 5.0 | 5.0 | 2.0 | 2.5 | 2.5 |
| | vulcanization accelerator (Phr) | 0.5 | 0.5 | 0.5 | 0.5 | 1.5 | 1.5 |
| | 100% modulus ($Kgf/cm^2$) | 35 | 35 | 35 | 18 | 34 | 34 |
| Cords | twisting structure | 3 + 9 × 0.20 + 1 | | | | | |
| | C content in steel (wt%) | 0.72 | 0.82 | 0.82 | 0.82 | 0.82 | 0.82 |
| | tensile strength ($Kgf/mm^2$) | 315 | 380 | 410 | 380 | 380 | 380 |
| | cord tenacity (kg/cord) | 117 | 141 | 152 | 141 | 141 | 141 |
| | end count (cords/50 mm) | 31.3 | 26.0 | 24.1 | 26.0 | 26.0 | 26.0 |
| | casing strength (kg/50 mm) | 3662 | 3666 | 3663 | 3666 | 3666 | 3666 |
| Evaluation | resistance to CBU | 100 | 87 | 73 | 118 | 115 | 118 |
| | resistance to carcass ply end separation | 100 | 103 | 105 | 96 | 147 | 145 |
| | weight reducing effect | 100 | 83 | 77 | 83 | 83 | 83 |

* 0.03 Phr as cobalt metal

Table 6(b)

| | | Example 17 | Example 18 | Example 19 | Comparative Example 14 | Example 20 | Example 21 |
|---|---|---|---|---|---|---|---|
| Plating | process | electro-plating | electro-plating | electro-plating | electro-plating | electro-plating | dry plating |
| | outermost coating metal | cobalt | cobalt | cobalt | brass | cobalt | cobalt |
| | cobalt plated thickness (μm) | 0.15 | 0.15 | 0.15 | - | 0.15 | 0.02 |
| Coating rubber | organic cobalt salt (cobalt naphthenate) (Phr) | - | - | 0.3 * | 2.0 | - | - |
| | sulfur (Phr) | 2.5 | 3.0 | 3.0 | 5.0 | 2.5 | 2.5 |
| | vulcanization accelerator (Phr) | 1.5 | 1.5 | 1.5 | 0.5 | 1.5 | 1.5 |
| | 100% modulus (Kgf/cm$^2$) | 34 | 38 | 40 | 35 | 34 | 34 |
| Cords | twisting structure | 3 + 9 × 0.20 + 1 | | | | 1 × 5 × 0.25 | |
| | C content in steel (wt%) | 0.82 | 0.82 | 0.82 | 0.82 | 0.82 | 0.82 |
| | tensile strength (Kgf/mm$^2$) | 410 | 380 | 380 | 380 | 380 | 380 |
| | cord tenacity (kg/cord) | 152 | 141 | 141 | 91 | 91 | 91 |
| | end count (cords/50 mm) | 24.1 | 26.0 | 26.0 | 40.2 | 40.2 | 40.2 |
| | casing strength (kg/50 mm) | 3663 | 3666 | 3666 | 3658 | 3658 | 3658 |
| Evaluation | resistance to CBU | 104 | 109 | 114 | 185 | 205 | 205 |
| | resistance to carcass ply end separation | 150 | 140 | 138 | 97 | 140 | 135 |
| | weight reducing effect | 77 | 83 | 83 | 80 | 80 | 80 |

* 0.03 Phr as cobalt metal

Examples 22-37, Comparative Examples 15-22

As a tire for evaluation, there were used a radial truck and bus tire having a tire size of 11/70 R22.5 and a radial passenger car tire having a tire size of 185 SR14.

The carcass ply structure of the radial truck and bus tire was a structure of lx5x0.25 mm, while structures of lx5x0.23 mm, lx2x0.30 mm and lx3x0.30 mm were used in the cross belt layers of the radial passenger car tire. Moreover, all of steel cords used had a carbon content of 0.82% by weight and the end count was constant.

As a method of coating filaments with cobalt before the twisting of filaments, there were used processes of electroplating and dry plating (sputtering) in the same manner as in the aforementioned examples.

As a coating rubber composition for the carcass ply of the radial tire for truck and bus (TBR) and a coating rubber composition for the belt of the radial tire for passenger car (PSR), there were used rubber compositions as shown in Tables 7-9, respectively. Furthermore, the same rubber composition was applied to adjoining members at ends of cords. Moreover, the variable value in Table 7 is shown in Tables 8 and 9.

Table 7

| Rubber composition | | |
|---|---|---|
| Rubber composition | Belt for PSR | Carcass ply for TBR |
| Natural rubber | 80 parts by weight | 80 |
| Polyisoprene rubber | 20 | 20 |
| Carbon black | 55 | 50 |
| Zinc white | 8 | 8 |
| Antioxidant (made by Monsanto, trade name: Santoflex 13) | 1.5 | 1.4 |
| Vulcanization accelerator (made by Ouchi Shinko K.K., trade name: Noccelar DZ) | variable | variable |
| Sulfur | variable | variable |
| Organic cobalt salt (cobalt naphthenate) | variable | variable |

The resistance to BES and resistance to PES were evaluated with respect to the test tires in the same manner as previously mentioned.

The resistance to BES was indicated by an index on the basis that tires of Comparative Examples 15, 19 and 21 were 100, respectively. The larger the index value, the better the resistance to BES. Furthermore, the resistance to PES was indicated by an index on the basis that the control tire of Comparative Example 17 was 100. The larger the index value, the better the resistance to PES.

The results of performance evaluations with respect to the test tires are shown in Tables 8 and 9.

Moreover, the substrate for cobalt plating in the above examples was iron plated with brass, but even when using iron alone as well as iron plated with copper or zinc as a substrate, the evaluation results shown in Tables 8 and 9 were unchanged.

Table 8(a)

| | | Comparative Example 15 | Comparative Example 16 | Example 22 | Example 23 | Example 24 | Example 25 |
|---|---|---|---|---|---|---|---|
| Kind of tire | | radial tire for passenger car | | | | | |
| Plating | process | electro-plating | electro-plating | electro-plating | dry plating | electro-plating | electro-plating |
| | outermost coating metal | brass | cobalt | cobalt | cobalt | cobalt | cobalt |
| | cobalt plated thickness (μm) | - | 0.15 | 0.15 | 0.03 | 0.15 | 0.15 |
| Coating rubber | organic cobalt salt (cobalt naphthenate) (Phr) | 2.0 | - | - | - | - | 0.3 * |
| | sulfur (Phr) | 5.0 | 1.5 | 3.0 | 3.0 | 4.0 | 4.0 |
| | vulcanization accelerator (Phr) | 0.8 | 0.5 | 1.8 | 1.8 | 1.8 | 1.8 |
| | 100% modulus ($Kgf/cm^2$) | 44 | 18 | 45 | 45 | 52 | 55 |
| Cords | twisting structure | 1 × 5 × 0.23 mm | | | | | |
| | elongation ($P_1$)%, (load of 5.0 kg/cord) | 0.65 | 0.65 | 0.65 | 0.65 | 0.65 | 0.65 |
| Tire performances | resistance to BES | 100 | 98 | 140 | 138 | 132 | 128 |
| | resistance to PES | - | - | - | - | - | - |

* 0.03 Phr as cobalt metal (wt%)

Table 8(b)

| | | Comparative Example 17 | Comparative Example 18 | Example 26 | Example 27 | Example 28 | Example 29 |
|---|---|---|---|---|---|---|---|
| Kind of tire | | radial tire for truck and bus | | | | | |
| Plating | process | electro-plating | electro-plating | electro-plating | dry plating | electro-plating | electro-plating |
| | outermost coating metal | brass | cobalt | cobalt | cobalt | cobalt | cobalt |
| | cobalt plated thickness (μm) | - | 0.15 | 0.15 | 0.02 | 0.15 | 0.15 |
| Coating rubber | organic cobalt salt (cobalt naphthenate) (Phr) | 2.0 | - | - | - | - | 0.3 * |
| | sulfur (Phr) | 5.0 | 2.0 | 2.5 | 2.5 | 3.0 | 3.0 |
| | vulcanization accelerator (Phr) | 0.5 | 0.5 | 1.5 | 1.5 | 1.5 | 1.5 |
| | 100% modulus ($Kgf/cm^2$) | 35 | 18 | 34 | 34 | 38 | 40 |
| Cords | twisting structure | 1 × 5 × 0.25 mm | | | | | |
| | elongation ($P_1$)%, (load of 5.0 kg/cord) | 0.63 | 0.63 | 0.63 | 0.63 | 0.63 | 0.63 |
| Tire performances | resistance to BES | - | - | - | - | - | - |
| | resistance to PES | 100 | 97 | 158 | 155 | 145 | 139 |

* 0.03 Phr as cobalt metal (wt%)

Table 9(a)

| | | Comparative Example 19 | Comparative Example 20 | Example 30 | Example 31 | Example 32 | Example 33 |
|---|---|---|---|---|---|---|---|
| Kind of tire | | radial tire for passenger car | | | | | |
| Plating | process | electro-plating | electro-plating | electro-plating | dry plating | electro-plating | electro-plating |
| | outermost coating metal | brass | cobalt | cobalt | cobalt | cobalt | cobalt |
| | cobalt plated thickness (μm) | - | 0.15 | 0.15 | 0.03 | 0.15 | 0.15 |
| Coating rubber | organic cobalt salt (cobalt naphthenate) (Phr) | 2.0 | - | - | - | - | 0.3 * |
| | sulfur (Phr) | 5.0 | 1.5 | 3.0 | 3.0 | 4.0 | 4.0 |
| | vulcanization accelerator (Phr) | 0.8 | 0.5 | 1.8 | 1.8 | 1.8 | 1.8 |
| | 100% modulus ($Kgf/cm^2$) | 44 | 18 | 45 | 45 | 52 | 55 |
| twisting structure | | 1 × 2 × 0.30 mm | | | | | |
| Tire performance: resistance to BES | | 100 | 98 | 140 | 140 | 135 | 130 |

* 0.03 Phr as cobalt metal (wt%)

Table 9(b)

| | | Comparative Example 21 | Comparative Example 22 | Example 34 | Example 35 | Example 36 | Example 37 |
|---|---|---|---|---|---|---|---|
| Kind of tire | | radial tire for passenger car | | | | | |
| Plating | process | electro-plating | electro-plating | electro-plating | dry plating | electro-plating | electro-plating |
| | outermost coating metal | brass | cobalt | cobalt | cobalt | cobalt | cobalt |
| | cobalt plated thickness (μm) | - | 0.15 | 0.15 | 0.02 | 0.15 | 0.15 |
| Coating rubber | organic cobalt salt (cobalt naphthenate) (Phr) | 2.0 | - | - | - | - | 0.3 * |
| | sulfur (Phr) | 5.0 | 1.5 | 3.0 | 3.0 | 4.0 | 4.0 |
| | vulcanization accelerator (Phr) | 0.8 | 0.5 | 1.8 | 1.8 | 1.8 | 1.8 |
| | 100% modulus (Kgf/cm²) | 44 | 18 | 45 | 45 | 52 | 55 |
| twisting structure | | 1 × 3 × 0.30 mm ** | | | | | |
| Tire performance: resistance to BES | | 100 | 97 | 142 | 140 | 135 | 128 |

* 0.03 Phr as cobalt metal (wt%)

** Elongation ($P_1$) is 0.4%

Examples 38-44, Comparative Examples 23, 24 Conventional Example 1

In these examples, two processes of electroplating and dry plating (sputtering) were used as a plating method of cord in the same manner as in previous examples.

As a rubber composition embedding steel cords subjected to the above cobalt plating, there were used rubber compositions having a compounding recipe (part by weight) as shown in Tables 10 and 11 and prepared according to usual rubber compounding manner. Moreover, the variable value in Table 10 is shown in Table 11.

Table 10

| | |
|---|---|
| Natural rubber | 75 parts by weight |
| Polyisoprene rubber | 25 parts by weight |
| Carbon black | 60 parts by weight |
| Zinc white | 8.0 parts by weight |
| Antioxidant (made by Monsanto, trade name: Santoflex 13) | 1.5 parts by weight |
| Vulcanization accelerator (made by Ouchi Shinko K.K., trade name: Noccelar DZ) | 1.0 parts by weight |
| Sulfur | variable |
| Organic cobalt salt (cobalt naphthenate) | variable |
| Bismaleimido compound | variable |

The adhesion test between the steel cord and the rubber and the peeling test of rubber were carried out according to JIS-K-6301. An outline of the test method is described as follows.

Index of initial adhesion force and adhesion interface state

According to the peeling test of JIS-K-6301, steel cords of lx3x0.20 mm + 6x0.38 mm were embedded in rubber at an end count of 26 cords/5 cm to form a strip specimen, which was cured at 145 °C for 40 minutes to obtain a test specimen.

Incisions were formed in the test specimen by means of a knife at a rate of 25 mm/min without causing rubber tearing and then a rubber piece was peeled off to measure peeling strength. A value obtained by dividing an average value of the peeling strengths by a peeling number was an initial adhesion force and indicated by an index on the basis that Conventional Example 1 was 100. The larger the index value, the higher the initial adhesion force.

The adhesion interface state was evaluated by observing the peeled surface of the specimen after the completion of the peeling test and measuring the adhered state of rubber onto the cord surface as a mark point mentioned below:

1 0-20% rubber adhered state
2 20-40% rubber adhered state
3 40-60% rubber adhered state
4 60-80% rubber adhered state
5 80-100% rubber adhered state

The larger the mark point, the better the adhesion interface state.

As to the tensile strength after thermal aging, the tensile test was carried out at room temperature after the aging was carried out at 100 °C for 24 hours by means of a gear type aging test machine according to an air heat aging test among aging tests of JIS-K-6301.6. The retention of tensile strength compared with tensile strength before the aging was measured and indicated by an index on the basis that Conventional Example 1 was 100. The larger the index value, the better the result.

The evaluation results are shown in Table 11.

Table 11

| | | | Conventional Example 1 | Comparative Example 23 | Comparative Example 24 | Example 38 | Example 39 | Example 40 | Example 41 | Example 42 | Example 43 | Example 44 |
|---|---|---|---|---|---|---|---|---|---|---|---|---|
| Rubber composition | bismaleimido compound | phenylene bismaleimide | - | 1.0 | - | 1.0 | - | - | 1.0 | 1.0 | 3.0 | 1.0 |
| | | hexamethylene bismaleimide | - | - | - | - | 1.0 | - | - | - | - | - |
| | | ethylene bismaleimide | - | - | - | - | - | 1.0 | - | - | - | - |
| | sulfur | | 5.0 | 4.0 | 4.0 | 4.0 | 4.0 | 4.0 | 2.5 | 4.0 | 2.0 | 4.0 |
| | organic cobalt salt (cobalt naphthenate) | | 2.0 | 2.0 | - | - | - | - | - | - | - | 0.3 * |
| Plating | process | | electroplating | electroplating | electroplating | electroplating | electroplating | electroplating | electroplating | dry plating | electroplating | electroplating |
| | outermost coating metal | | brass | brass | cobalt | cobalt | cobalt | cobalt | cobalt | cobalt | cobalt | cobalt |
| | cobalt plated thickness (μm) | | - | - | 0.20 | 0.20 | 0.20 | 0.20 | 0.20 | 0.05 | 0.20 | 0.20 |
| Measured values | index of initial adhesion force | | 100 | 30 | 101 | 104 | 100 | 102 | 101 | 103 | 100 | 100 |
| | adhesion interface state | | 5 | 1 | 5 | 5 | 5 | 5 | 5 | 5 | 5 | 5 |
| | retention of tensile strength after aging % (index) | | 53 (100) | 63 (119) | 71 (134) | 80 (151) | 79 (149) | 78 (147) | 86 (162) | 80 (151) | 83 (157) | 78 (147) |

* 0.03 Phr as cobalt metal

As seen from Table 11, in the composite of steel cord and rubber composition according to the invention, the resistance to thermal aging was largely improved without losing the initial adhesion property.

Examples 45-50, Comparative Examples 25, 26, Conventional Example 2

As a tire for evaluation, there were used radial tires for passenger cars having tire sizes of 185 SR14 and P215/75 R15, and the performances thereof were evaluated.

In the cross belt layers of the radial passenger car tires there were used steel cords of lx5x0.23 mm structure.

Moreover, all of the steel cords used had a carbon content of 0.82% by weight and the end count thereof was constant.

The method of plating cobalt to the above steel cords was the same as described in the aforementioned examples. The coating rubber composition for the steel cord was prepared in the usual rubber compounding manner according to a compounding recipe (parts by weight) as shown in Tables 12 and 13. Moreover, the variable value in Table 12 is shown in Table 13.

Table 12

| | |
|---|---|
| Natural rubber | 80 parts by weight |
| Polyisoprene rubber | 20 parts by weight |
| Carbon black | 55 parts by weight |
| Zinc white | 8 parts by weight |
| Antioxidant (made by Monsanto, trade name: Santoflex 13) | 1.5 parts by weight |
| Vulcanization accelerator (made by Ouchi Shinko K.K., trade name: Noccelar DZ) | variable |
| Sulfur | variable |
| Organic cobalt salt (cobalt naphthenate) | variable |
| Bismaleimido compound | variable |

The performance evaluations with respect to the above test tires were carried out as follows.

Resistance to BES

After the radial passenger car tire having a tire size of P 215/75 R15 was actually run in a tropic zone over a distance of 70,000km, it was cut to measure a crack length at an end of the cross belt layer located toward the tread side. That is, rubber was peeled off from the cord of this belt layer to expose the cord end, and the length of crack produced along the cord was measured by means of vernier calipers and indicated by an index on the basis that Conventional Example 2 was 100.

After the radial passenger car tire having a tire size of 185 SR14 was actually run in Japan over a distance of 50,000km, the length of crack produced along the belt cord was measured in the same manner as mentioned above and indicated by an index on the basis that Conventional Example 2 was 100.

The larger the index value, the better the resistance to BES.

The results of performance evaluation with respect to the test tires are shown in Table 13.

Moreover, the substrate for cobalt plating in the above examples was iron plated with brass, but even when using iron alone as well as iron plated with copper or zinc as a substrate, the evaluation results shown in Table 13 were unchanged.

Table 13

| | | | Conventional Example 2 | Comparative Example 25 | Comparative Example 26 | Example 45 | Example 46 | Example 47 | Example 48 | Example 49 | Example 50 |
|---|---|---|---|---|---|---|---|---|---|---|---|
| Rubber composition | bismaleimido compound | phenylene bismaleimide | - | - | - | 1.0 | - | - | 1.0 | 1.0 | 1.0 |
| | | hexamethylene bismaleimide | - | - | - | - | 1.0 | - | - | - | - |
| | | ethylene bismaleimide | - | - | - | - | - | 1.0 | - | - | - |
| | sulfur | | 5.0 | 1.5 | 3.0 | 3.0 | 3.0 | 3.0 | 3.0 | 2.0 | 3.0 |
| | organic cobalt salt (cobalt naphthenate) | | 2.0 | - | - | - | - | - | - | - | 0.3 * |
| | vulcanization accelerator | | 0.8 | 0.5 | 1.6 | 1.6 | 1.6 | 1.6 | 1.6 | 1.6 | 1.6 |
| | 100% modulus ($Kgf/cm^2$) | | 44 | 18 | 44 | 52 | 50 | 51 | 52 | 45 | 54 |
| Plating | process | | electro-plating | electro-plating | electro-plating | electro-plating | electro-plating | electro-plating | dry plating | electro-plating | electro-plating |
| | outermost coating metal | | brass | cobalt | cobalt | cobalt | cobalt | cobalt | cobalt | cobalt | cobalt |
| | cobalt plated thickness ($\mu m$) | | - | 0.15 | 0.15 | 0.15 | 0.15 | 0.15 | 0.03 | 0.15 | 0.15 |
| Resistance to BES of tire | running test in tropic zone | | 100 | 98 | 135 | 145 | 142 | 140 | 145 | 150 | 138 |
| | running test in Japan | | 100 | 93 | 97 | 108 | 105 | 105 | 106 | 106 | 104 |

* 0.03 Phr as cobalt metal

As seen from the evaluation results of tire performance in Table 13 by both running tests in Japan and the Middle and Near East, in the radial tires according to the invention, the resistance to BES was largely improved.

As seen from the above examples, in the radial tires according to the invention, the tire weight can be reduced and the performances such as resistance to BES, resistance to PES and corrosion fatigue

resistance are largely improved, so that the invention can considerably improve the durable life of radial tires such as radial tires for passenger cars, radial tires for trucks and buses, radial tires for light trucks and the like.

Furthermore, the amount of sulfur contained in the coating rubber layer can be reduced in the invention, so that the reduction of sulfur in adjoining rubber members of the tire as well as the adjoining members themselves can be achieved, and hence it is possible to produce new light-weight tires, which has not been possible by the conventional technique.

## Claims

1. A pneumatic radial tire (1; 10) comprising a toroidal carcass (7) composed of steel cords substantially arranged in parallel to a meridional section of the tire and a coating rubber therefor, and a belt (8) composed of steel cords arranged outside of a crown portion of the carcass and inside a tread (5) and a coating rubber therefor, the steel cord in the belt being obtained by twisting a plurality of filaments having a carbon content of 0.75-0.90% by weight, and being provided at its surface with a cobalt plated layer, characterized in that the steel cord in the belt satisfies the following relations as a tensile strength TS (Kgf/mm$^2$) at a diameter d (mm) of the filament:

$$TS \geqq 281.60 + 288.75d \text{ when } 0.1 \leqq d < 0.2$$
$$TS \geqq 427.25 - 439.50d \text{ when } 0.2 \leqq d \leqq 0.5$$

and the coating rubber has a 100% modulus of not less than 20 Kgf/cm$^2$ after vulcanization.

2. A pneumatic radial tire according to claim 1, characterized in that said filament has a diameter d of 0.15-0.40 mm$\phi$.

3. A pneumatic radial tire according to claim 1 or 2, characterized in that said relation between d and TS satisfies the following equations:

$$TS \geqq 345 - 30d \text{ when } 0.1 \leqq d < 0.2$$
$$TS \geqq 379 - 200d \text{ when } 0.2 \leqq d \leqq 0.5.$$

4. A pneumatic radial tire (1; 10) comprising a toroidal carcass (7) composed of steel cords substantially arranged in parallel to a meriodional section of the tire and a coating rubber therefor, and a belt (8) composed of steel cords arranged outside of a crown portion of the carcass and inside a tread (5) and a coating rubber therefor, characterized in that said steel cord of the belt is a steel cord composed of single steel wire having a diameter of 0.2-0.7mm and provided at its surface with a cobalt plated layer, and the coating rubber after vulcanization has a 100% modulus of not less than 20 Kgf/cm$^2$.

5. A pneumatic radial tire (1; 10) comprising a toroidal carcass (7) composed of steel cords substantially arranged in parallel to a meridional section of the tire and a coating rubber therefor, and a belt (8) composed of steel cords arranged outside of a crown portion of the carcass and inside a tread (5) and a coating rubber therefor, the steel cord in the carcass being obtained by twisting a plurality of filaments each having a carbon content of 0.75-0.90% by weight, and being provided at its surface with a cobalt plated layer, characterized in that the steel cord in the carcass has a tensile strength of filament of not less than 320 Kgf/mm$^2$, and the coating rubber has a 100% modulus of not less than 20 Kgf/cm$^2$ after vulcanization.

6. A pneumatic radial tire according to claim 5, characterized in that said filament has a diameter d of 0.15-0.25 mm$\phi$.

7. A pneumatic radial tire according to any of claims 1 to 5, characterized in that said cobalt plated layer is formed by an electroplating.

8. A pneumatic radial tire according to claim 7, characterized in that said cobalt plated layer formed by said electroplating has a thickness of 0.05-0.40$\mu$m.

**9.** A pneumatic radial tire according to any of claims 1 to 5, characterized in that said cobalt plated layer is formed by a dry plating.

**10.** A pneumatic radial tire according to claim 9, characterized in that said cobalt plated layer formed by said dry plating has a thickness of 0.001-0.15 $\mu$m.

**11.** A pneumatic radial tire according to claim 1 or 5, characterized in that said steel cord is a single constructed steel cord of lxn structure (n is an integer of 2-6) by twisting 2-6 filaments and the filament diameter is 0.15-0.5mm.

**12.** A pneumatic radial tire according to claim 11, characterized in that n is 2 in said single constructed steel cord of lxn structure.

**13.** A pneumatic radial tire according to claim 11, characterized in that n is 3-6 in said single constructed steel cord and an elongation ($P_1$) when a load of 5.0 kg is applied to the steel cord is within a range of 0.2-1.2%.

**14.** A pneumatic radial tire according to any of claims 1 to 13, characterized in that said coating rubber for the carcass or the belt is a rubber composition containing 0-0.1 part by weight as a cobalt metal of organic cobalt metal salt and 0.15-4.0 parts by weight of sulfur based on 100 parts by weight of rubber component.

**15.** A pneumatic radial tire according to any of claims 1 to 13, characterized in that said coating rubber for the carcass or the belt is a rubber composition containing 0-0.1 part by weight as a cobalt metal of organic cobalt metal salt, 0.15-4.0 parts by weight of sulfur and 0.05-6.0 parts by weight of a bismaleimido compound represented by the following formula:

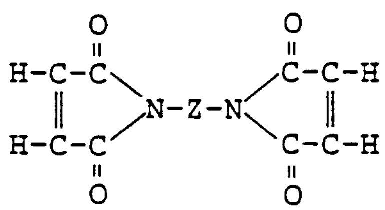

(wherein Z is an alkylene group, phenylene group, alkyl-phenylene group or a combination of two or more of these groups) based on 100 parts by weight of rubber component.

## Patentansprüche

**1.** Radialer Luftreifen (1; 10), mit einer toroidförmigen Karkasse (7), die aus im wesentlichen parallel zu einem Achsenschnitt des Reifens angeordneten Stahlcordfäden und einem Beschichtungsgummi dafür besteht, und einem Gürtel (8), der aus außerhalb eines Kronenbereichs der Karkasse und innerhalb einer Lauffläche (5) angeordneten Stahlcordfäden und einem Beschichtungsgummi dafür besteht, wobei der Stahlcordfäden in dem Gürtel durch Verdrillen einer Vielzahl von Filamenten erhalten wird, die einen Kohlenstoffgehalt von 0,75-0,90 Gewichtsprozent haben, und an ihrer Oberfläche mit einer plattierten Kobaltschicht versehen sind, dadurch gekennzeichnet, daß der Stahlcordfaden in dem Gürtel bei einem Durchmesser (d) mm des Filaments die folgenden Beziehungen für die Zugfestigkeit TS ($kp/mm^2$) erfüllt:

$$TS \geqq 281{,}60 + 288{,}75d, \text{ wenn } 0{,}1 \leqq d < 0{,}2$$
$$TS \geqq 427{,}25 - 439{,}50d, \text{ wenn } 0{,}2 \leqq d \leqq 0{,}5$$

und der Beschichtungsgummi nach der Vulkanisation einen 100%-Elastizitätsmodul von nicht weniger als 20 $kp/cm^2$ hat.

2. Radialer Luftreifen gemäß Anspruch 1, dadurch gekennzeichnet, daß das Filament einen Durchmesser d von 0,15-0,40 mm hat.

3. Radialer Luftreifen gemäß Anspruch 1 oder 2, dadurch gekennzeichnet, daß der Zusammenhang zwischen d und TS die folgenden Beziehungen erfüllt:

$$TS \geqq 345\text{-}30d,\ \text{wenn}\ 0{,}1 \leqq d < 0{,}2$$
$$TS \geqq 379\text{-}200d,\ \text{wenn}\ 0{,}2 \leqq d \leqq 0{,}5.$$

4. Radialer Luftreifen (1; 10), mit einer toroidförmigen Karkasse (7), die aus im wesentlichen parallel zu einem Achsenschnitt des Reifens angeordneten Stahlcordfäden und einem Beschichtungsgummi dafür besteht, und einem Gürtel (8), der aus außerhalb eines Kronenbereichs der Karkasse und innerhalb einer Lauffläche (5) angeordneten Stahlcordfäden und einem Beschichtungsgummi dafür besteht, dadurch gekennzeichnet, daß der Stahlcordfaden des Gürtels ein Stahlcordfaden ist, der aus einem einzelnen Stahldraht besteht, der einen Durchmesser von 0,2-0,7 mm hat und an seiner Oberfläche mit einer plattierten Kobaltschicht versehen ist, und der Beschichtungsgummi nach der Vulkanisation einen 100%-Elastizitätsmodul von nicht weniger als 20 $kp/cm^2$ hat.

5. Radialer Luftreifen (1; 10), mit einer toroidförmigen Karkasse (7), die aus im wesentlichen parallel zu einem Achsenschnitt des Reifens angeordneten Stahlcordfäden und einem Beschichtungsgummi dafür besteht, und einem Gürtel (8), der aus außerhalb eines Kronenbereichs der Karkasse und innerhalb einer Lauffläche (5) angeordneten Stahlcordfäden und einem Beschichtungsgummi dafür besteht, wobei der Stahlcordfaden in der Karkasse durch Verdrillen einer Vielzahl von Filamenten erhalten wird, die einen Kohlenstoffgehalt von 0,75-0,90 Gewichtsprozent haben, und an ihrer Oberfläche mit einer plattierten Kobaltschicht versehen sind, dadurch gekennzeichnet, daß der Stahlcordfaden in der Karkasse eine Filament-Zugfestigkeit von nicht weniger als 320 $kp/mm^2$ hat, und der Beschichtungsgummi nach der Vulkanisation einen 100%-Elastizitätsmodul von nicht weniger als 20 $kp/cm^2$ hat.

6. Radialer Luftreifen gemäß Anspruch 5, dadurch gekennzeichnet, daß das Filament einen Durchmesser d von 0,15-0,25 mm hat.

7. Radialer Luftreifen gemäß irgendeinem der Ansprüche 1 bis 5, dadurch gekennzeichnet, daß die plattierte Kobaltschicht durch Elektroplattieren gebildet wird.

8. Radialer Luftreifen gemäß Anspruch 7, dadurch gekennzeichnet, daß die durch Elektroplattieren gebildete plattierte Kobaltschicht eine Dicke von 0,05-0,40 $\mu m$ hat.

9. Radialer Luftreifen gemäß irgendeinem der Ansprüche 1 bis 5, dadurch gekennzeichnet, daß die plattierte Kobaltschicht durch Trockenplattieren gebildet wird.

10. Radialer Luftreifen gemäß Anspruch 9, dadurch gekennzeichnet, daß die durch Trockenplattieren gebildete plattierte Kobaltschicht eine Dicke von 0,001-0,15 $\mu m$ hat.

11. Radialer Luftreifen gemäß Anspruch 1 oder 5, dadurch gekennzeichnet, daß der Stahlcordfaden ein einfachverdrillter Stahlcordfaden mit der Struktur $1 \times n$ ist (wobei n eine ganze Zahl von 2-6 ist), die durch Verdrillen von 2-6 Filamenten erhalten wird, und der Filamentdurchmesser 0,15-0,5 mm beträgt.

12. Radialer Luftreifen gemäß Anspruch 11, dadurch gekennzeichnet, daß n bei dem einfachverdrillten Stahlcordfaden mit der Struktur $1 \times n$ gleich 2 ist.

13. Radialer Luftreifen gemäß Anspruch 11, dadurch gekennzeichnet, daß n bei dem einfachverdrillten Stahlcordfaden gleich 3-6 ist, und die Dehnung ($P_1$) bei Belastung des Stahlcordfadens mit 5,0 kg innerhalb des Bereichs von 0,2-1,2% liegt.

14. Radialer Luftreifen gemäß irgendeinem der Ansprüche 1 bis 13, dadurch gekennzeichnet, daß der Beschichtungsgummi für die Karkasse oder den Gürtel eine Gummizusammensetzung ist, die bezogen auf 100 Gewichtsteile der Gummikomponente 0-0,1 Gewichtsteile Kobalt als organisches Kobaltsalz und 0,15-4,0 Gewichtsteile Schwefel enthält.

**15.** Radialer Luftreifen gemäß irgendeinem der Ansprüche 1 bis 13, dadurch gekennzeichnet, daß der Beschichtungsgummi für die Karkasse oder den Gürtel eine Gummizusammensetzung ist, die bezogen auf 100 Gewichtsteile der Gummikomponente 0-0,1 Gewichtsteile Kobalt als organisches Kobaltsalz, 0,15-4,0 Gewichtsteile Schwefel, und 0,05-6,0 Gewichtsteile einer Bismaleimidverbindung enthält, wobei die Bismaleimidverbindung die folgende Formel hat:

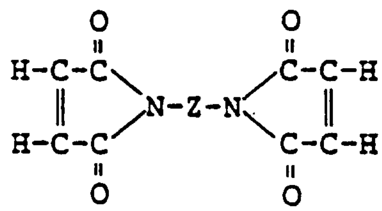

(bei der Z eine Alkylengruppe, Phenylengruppe, Alkylphenylengruppe, oder eine Kombination von zwei oder mehreren dieser Gruppen ist).

## Revendications

**1.** Bandage pneumatique radial (1; 10) comprenant une carcasse toroïdale (7) composée de câblés en acier arrangés essentiellement en parallèle à la section méridienne du bandage pneumatique et d'un caoutchouc d'enrobage qui lui est destiné, ainsi qu'une ceinture (8) composée de câblés en acier arrangés à l'extérieur de la portion de couronne de la carcasse et à l'intérieur de la bande de roulement (5), et d'un caoutchouc d'enrobage qui lui est destiné, le câblé en acier dans la ceinture étant obtenu en torsadant plusieurs filaments possédant une teneur en carbone de 0,75-0,90% en poids et étant muni, à sa surface, d'une couche plaquée de cobalt, caractérisé en ce que le câblé en acier dans la ceinture répond aux équations ci-après concernant la résistance à la traction TS ($kg/mm^2$) à un diamètre d (mm) du filament :

$$TS \geqq 81,60 + 288,75d \text{ lorsque } 0,1 \leqq d < 0,2$$
$$TS \geqq 427,25 - 439,50d \text{ lorsque } 0,2 \leqq d \leqq 0,5$$

et le caoutchouc d'enrobage possède un module à 100% qui n'est pas inférieur à 20 $kg/cm^2$ après la vulcanisation.

**2.** Bandage pneumatique radial selon la revendication 1, caractérisé en ce que ledit filament possède un diamètre d de 0,15-0,40 mm.

**3.** Bandage pneumatique radial selon la revendication 1 ou 2, caractérisé en ce que ladite relation entre d et TS répond aux équations ci-après :

$$TS \geqq 435-30d \text{ lorsque } 0,1 \leqq d < 0,2$$
$$TS \geqq 379-200d \text{ lorsque } 0,2 \leqq d \leqq 0,5.$$

**4.** Bandage pneumatique radial (1; 10) comprenant une carcasse toroïdale (7) composée de câblés en acier arrangés essentiellement en parallèle à la section méridienne du bandage pneumatique et d'un caoutchouc d'enrobage qui lui est destiné, ainsi qu'une ceinture (8) composée de câblés en acier arrangés à l'extérieur de la portion de couronne de la carcasse et à l'intérieur de la bande de roulement (5), et d'un caoutchouc d'enrobage qui lui est destiné, caractérisé en ce que ledit câblé en acier de la ceinture est un câblé en acier composé d'un monofil en acier possédant un diamètre de 0,2-0,7 mm et muni, à sa surface, d'une couche plaquée de cobalt, et le caoutchouc d'enrobage, après la vulcanisation, possède un module à 100% qui n'est pas inférieur à 20 $kg/cm^2$.

**5.** Bandage pneumatique radial (1; 10) comprenant une carcasse toroïdale (7) composée de câblés en acier arrangés essentiellement en parallèle à la section méridienne du bandage pneumatique et d'un caoutchouc d'enrobage qui lui est destiné, ainsi qu'une ceinture (8) composée de câblés en acier

arrangés à l'extérieur de la portion de couronne de la carcasse et à l'intérieur de la bande de roulement (5), et d'un caoutchouc d'enrobage qui lui est destiné, le câblé en acier dans la carcasse étant obtenu en torsadant plusieurs filaments possédant chacun une teneur en carbone de 0,75-0,90% en poids et étant muni, à sa surface, d'une couche plaquée de cobalt, caractérisé en ce que le câblé en acier dans la carcasse possède une résistance à la traction du filament qui n'est pas inférieure à 320 kg/mm$^2$, et le caoutchouc d'enrobage possède un module à 100% qui n'est pas inférieur à 20 kg/cm$^2$ après la vulcanisation.

**6.** Bandage pneumatique radial selon la revendication 5, caractérisé en ce que ledit filament possède un diamètre d de 0,15-0,25 mm.

**7.** Bandage pneumatique radial selon l'une quelconque des revendications 1 à 5, caractérisé en ce que ladite couche plaquée de cobalt est formée par électrodéposition.

**8.** Bandage pneumatique radial selon la revendication 7, caractérisé en ce que ladite couche plaquée de cobalt formée par ladite électrodéposition possède une épaisseur de 0,05-0,40 $\mu$m.

**9.** Bandage pneumatique radial selon l'une quelconque des revendications 1 à 5, caractérisé en ce que ladite couche plaquée de cobalt est formée par placage à sec.

**10.** Bandage pneumatique radial selon la revendication 9, caractérisé en ce que ladite couche plaquée de cobalt formée par ladite placage à sec possède une épaisseur de 0,001-0,15 $\mu$m.

**11.** Bandage pneumatique radial selon la revendication 1 ou 5, caractérisé en ce que ledit câblé en acier est un câblé en acier unique de structure 1xn (n est un entier de 2-6) obtenu en torsadant 2-6 filaments, et le diamètre du filament est de 0,15-0,5 mm.

**12.** Bandage pneumatique radial selon la revendication 11, caractérisé en ce que n est égal à 2 dans ledit câblé en acier unique de structure 1xn.

**13.** Bandage pneumatique radial selon la revendication 11, caractérisé en ce que n est égal à 3-6 dans ledit câblé en acier unique et l'allongement ($P_1$), lorsqu'une charge de 5,0 kg s'exerce sur le câblé en acier, se situe dans le domaine de 0,2-1,2%.

**14.** Bandage pneumatique radial selon l'une quelconque des revendications 1 à 13, caractérisé en ce que ledit caoutchouc d'enrobage pour la carcasse ou pour la ceinture est une composition de caoutchouc contenant 0-0,1 partie en poids de cobalt, sous forme d'un sel organique de cobalt, et 0,15-4,0 parties en poids de soufre, basées sur 100 parties en poids du composant de caoutchouc.

**15.** Bandage pneumatique radial selon l'une quelconque des revendications 1 à 13, caractérisé en ce que ledit caoutchouc d'enrobage pour la carcasse ou pour la ceinture est une composition de caoutchouc contenant 0-0,1 partie en poids de cobalt, sous forme d'un sel organique de cobalt, 0,15-4,0 parties en poids de soufre et 0,05-6,0 parties en poids d'un composé bismaléimido répondant à la formule ci-après :

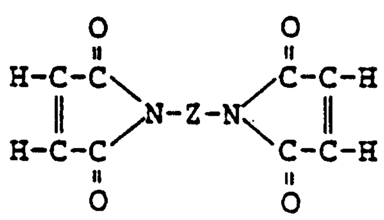

(dans laquelle Z représente un groupe alkylène, un groupe phénylène, un groupe alkylphénylène ou encore une combinaison de deux ou de plusieurs de ces groupes), basées sur 100 parties en poids du composant de caoutchouc.

FIG_1

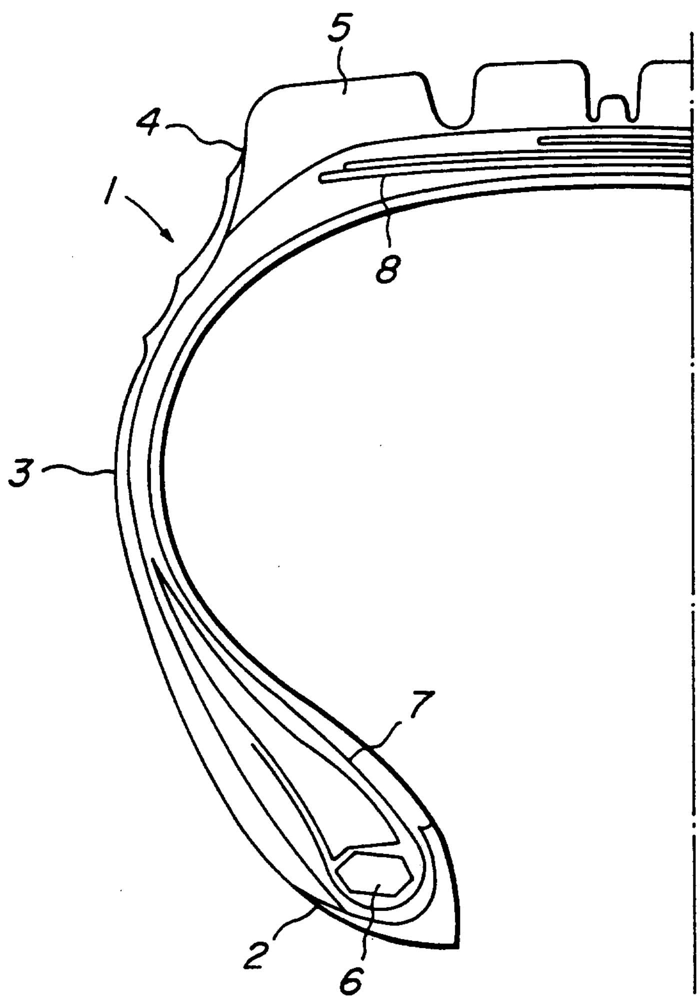

FIG.2